# EUROPEAN PATENT APPLICATION

(11) **EP 1 712 327 A1**
(43) Date of publication of application: **18.10.2006**
(21) Application number: 06000262.3
(22) Date of filing: 07.01.2006
(51) Int. Cl.: B23K 35/30, B23K 35/02, B23K 35/36

(54) **High strength flux cored electrode**

(30) Priority: 09.08.2005 US 199882; 11.04.2005 US 669976 P
(71) Applicant: LINCOLN GLOBAL, INC., Santa Fe Springs CA 90670 (US)
(72) Inventor: James, Matthew Jay, Brunswick OH 44212 (US); Coyne, Patrick J., Eastlake OH 44095 (US)
(74) Representative: Hennicke, Ernst Rüdiger

(57) **Abstract**

Disclosed are electrode compositions that produce high strength and/or high impact toughness weld deposits that exhibit reduced potential for hydrogen cracking. Also disclosed are the compositions of various high strength and/or high impact toughness weld deposits that exhibit reduced potentials for hydrogen cracking. Related methods of arc welding the noted electrodes are also disclosed.

## Description

The present invention is directed to reducing hydrogen cracking in high strength welds. The present invention is also directed to producing weld deposits that exhibit high strength and high impact toughness.

### BACKGROUND OF INVENTION

Hydrogen dissolves in all metals to a moderate extent. It is a very small atom, and fits between the metal atoms in the crystal lattice of the metal. Consequently, it can diffuse much more rapidly than larger atoms. For example, the diffusion coefficient for hydrogen in ferritic steel at room temperature is similar to the diffusion coefficient for salt in water. Hydrogen tends to be attracted to regions of high triaxial tensile stress where the metal structure is dilated. Thus, it is drawn to the regions ahead of cracks or notches that are under stress. The dissolved hydrogen can assist in the fracture of the metal, possibly by making cleavage easier or possibly by assisting in the development of intense local plastic deformation. These effects lead to embrittlement of the metal.

Hydrogen induced cracking, also known as delayed cracking or cold cracking, has been one of the most common and serious problems encountered in steel weldments. A common source of hydrogen is from moisture. Grease, hydrated oxides and other contaminants are also potential sources of hydrogen. Hydrogen can be introduced into the weld region through the welding electrode, shielding materials, base metal surface and the atmosphere or external agents.

Hydrogen induced cracking can occur in the weld heat affected zone (HAZ) and in the fusion zone (FZ). While the reasons for cracking are the same, controlling the factors that cause cracking can be different for the HAZ and FZ. For the HAZ, control of cracking generally originates from steel-making processes, which incorporate agents or treatments to avoid susceptible microstructures and eliminate sources of hydrogen in the base metal (steel). If the weld metal has a high hydrogen content, this can actually "charge" the HAZ with hydrogen via diffusion of hydrogen from the weld metal (high concentration) to the HAZ (low concentration). So, using a weld metal of low hydrogen content can also help to prevent hydrogen cracking in the HAZ. Control of cracking can also result from using proper welding techniques, including preheating and control of the heat input. For the FZ, control of susceptibility to hydrogen induced cracking is typically achieved by adding alloying elements in the consumables, and careful selection of proper welding techniques, including preheating and control of the heat input.

The most common and effective method of reducing the potential for hydrogen induced cracking is specifying minimum preheat and interpass temperatures for welding. In general, the higher the preheat, the less chance for formation of brittle microstructures and more time for the hydrogen to diffuse from the weld. However, preheating is time consuming and costly.

All steels are affected by hydrogen, as is evidenced by the influence of hydrogen on corrosion fatigue crack growth, and the occurrence of hydrogen induced cracking under the influence of very high hydrogen concentrations. However, hydrogen embrittlement under static load is only experienced in steels of relatively high strength. And so, due to typical applications for high strength steels, hydrogen induced cracking or hydrogen embrittlement is of particular concern. There is no standard limit for the strength level above which hydrogen related problems will be experienced, as this is a function of the amount of hydrogen in the steel, the applied stress, the severity of the stress concentration and the composition and microstructure of the steel. As a rough guide, hydrogen embrittlement is unlikely for modern steels with yield strengths below about 415 N/mm² (415 MPa), and is likely to become a major problem for steels with yield strengths above about 690 N/mm² (690 MPa). The effects of hydrogen introduced into the weld and surrounding base metal may be reduced by heating for a few hours at around 200°C. This is sometimes called a postweld "soak". This allows some of the hydrogen to diffuse out of the steel while another fraction becomes bound to relatively harmless sites in the microstructure. However, as previously noted, heating is time consuming and costly. Also, it is sometimes not feasible to do this due to the size of the weldment.

Accordingly, there is a need for a technique for reducing the potential of hydrogen induced cracking in welds of high strength steels.

Prior artisans have formulated welding materials to attempt to reduce the potential for hydrogen induced cracking or hydrogen embrittlement of the weldment. For example, U.S. Patent 4,103,067 describes an arc welding electrode said to produce weld metal having low amounts of hydrogen therein so that hydrogen cracking of the weld is minimized. The electrode uses a flux covering containing barium or cesium which are said to reduce the temperature during welding which in turn minimizes the amount of hydrogen introduced into the weld metal. In addition, US 4,103,067 describes incorporation of hygroscopic materials in the electrodes to reduce the moisture content therein and further reduce the likelihood for increased hydrogen content in the weld or weldment.

More recently, U.S. Patent 6,565,678 describes welding materials for producing weld metals that are said to exhibit distinct microstructural features that lead to increased hydrogen cracking resistance. Specifically, the '678 patent describes the increased hydrogen cracking resistance as resulting from limiting the carbon content and including a minor volume percent of acicular ferrite in the microstructure, along with a hard constituent such as lath mastensite. Additionally, it is instructive to note that the approach adopted in the '678 patent employs a relatively large number of welding passes, such as at least 6, and often as many as 8, 10, or more. Although in certain respects a high strength weld can be produced, such processes are time consuming and costly due to the high number of passes.

U.S. Published Patent Application 2005/0016980 describes high strength weld metals having relatively low amounts of diffusible hydrogen. This prior patent application asserts that since the total amount of hydrogen dissolving in a weld metal during welding is generally constant, the amount of diffusible hydrogen (leading to hydrogen cracking) can be reduced by increasing the amount of non-diffusible hydrogen. And so, the '980 application describes certain precipitates which are said to trap hydrogen and certain inclusions which are said to absorb hydrogen, thereby increasing the amount of non-diffusible hydrogen.

Although all of these prior attempts at reducing the potential for hydrogen cracking are satisfactory in varying degrees, a need remains for another strategy by which the potential for hydrogen induced cracking can be reduced, particularly for welds exhibiting high strength characteristics

### THE INVENTION

In one aspect, the present invention provides a cored electrode adapted for depositing a high strength weld deposit in an electric arc welding process. The high strength weld deposit comprises by weight from about 0.05 to about 0.20% carbon. The weld deposit also comprises from about 1.4 to about 2.4% manganese. The weld deposit also comprises from about 0.2 to about 0.4% silicon. The deposit further comprises from about 2.3 to about 5.4% nickel. The weld deposit also comprises from about 0.6 to about 1.0% chromium. The weld deposit also comprises from about 0.25 to about 1.10% molybdenum. And, the weld comprises effective amounts of iron.

In another aspect, the present invention provides a cored electrode adapted for depositing a weld deposit in an electric arc welding process that exhibits high impact toughness. The high impact toughness weld deposit comprises by weight from about 0.05 to about 0.20% carbon. The weld deposit also comprises from about 1.4 to about 2.4% manganese. The weld deposit also comprises from about 0.2 to about 0.4% silicon. The deposit further comprises from about 2.3 to about 5.4% nickel. The weld deposit also comprises from about 0.6 to about 1.0% chromium. The weld deposit also comprises from about 0.25 to about 1.10% molybdenum. And, the weld comprises effective amounts of iron. The high impact toughness weld deposit exhibits at least one impact toughness value of (i) up to 100 J at -30°C (75 ft-lbs @ -30°C), (ii) up to 135 J at -20°C (100 ft-lbs @ -20°C), and (iii) up to 170 J at 0°C (125 ft-lbs @ 0°C).

In yet another aspect, the present invention provides a method of arc welding high strength steel. The method comprises providing a cored electrode adapted to deposit a high strength weld. The weld composition formed from the electrode includes by weight from about 0.05 to about 0.20% carbon, from about 1.4 to about 2.4% manganese, from about 0.2 to about 0.4% silicon, from about 2.3 to about 5.4% nickel, from about 0.6 to about 1.0% chromium, from about 0.25 to about 1.10% molybdenum, and effective amounts of iron. The method also comprises passing electric current through the electrode to melt the electrode and form the weld deposit upon the steel.

### PREFERRED EMBODIMENTS

In accordance with the present discovery, various weld compositions and electrode compositions are provided which exhibit a significantly reduced potential for hydrogen induced cracking.

The present invention is directed to an improved electrode, and particularly, a flux cored electrode that is specifically formulated to provide a high strength weld that is particularly resistant to hydrogen induced cracking. The flux cored electrode is formulated to deposit a crack resistant, high strength steel composition that is particularly useful for applications requiring high strength.

The present invention is also directed to a method of arc welding high strength steel. The method involves the use of an electrode composition as described herein to provide a high strength weld that is particularly resistant to hydrogen induced cracking.

The term "high strength steels" refers to steels having yield strengths of about 690 N/mm² (690 MPa) or more. Weld deposits having "high strength" as described herein exhibit comparable yield strengths and characteristics that enable the weld metal to be used in typical applications where high strength steels are used. For example, a high strength weld deposit as described herein exhibits a yield strength of at least about 690 N/mm² (MPa).

The preferred embodiment electrodes and resulting deposit compositions also exhibit excellent impact toughness. That is, in addition to high strength, the compositions of the present invention also exhibit excellent impact toughness. Impact toughness can minimize the potential for catastrophic failure. The deposit compositions described herein, exhibit remarkable resistance to rupture even if severely overloaded to a point at which deformation occurs.

As known by those skilled in the art, the measurement of toughness involves quantifying the force required to propagate (or grow) a crack. Propagation of a crack in a given material requires a certain amount of energy which is characteristic of a particular material at a given temperature. A tough material will absorb a significant amount of energy before a crack will grow, while a brittle material absorbs little energy. The measure of toughness of a material is in the energy it absorbs during testing.

The toughness of a material also depends on the temperature at which the material operates. Tests that measure toughness must specify the temperature at which testing is to be carried out and the minimum level of impact energy required at that temperature.

The most common type of testing is known as Charpy Impact Testing. This test is known as an impact test because the test piece is struck by a hammer on the end of a pendulum. Upon impact a certain amount of energy is absorbed in fracturing the test piece. The amount of absorbed energy determines the height to which the pendulum rebounds, thus providing a measurement of the toughness of the material.

Failure, as a result of fracture occurs where there are flaws or stress raisers in a structure. Hence, the test piece for toughness testing (commonly known as a "charpy") is notched to represent this situation. The notch is standardized to ensure a ready comparison between samples.

Preferred embodiment weld deposits described herein exhibit impact toughness values of at least one of (i) up to 100 J at -30°C (75 ft-lbs @ -30°C), (ii) up to 135 J at -20°C (100 ft-lbs @ -20°C), and (iii) up to 170 J at 0°C (125 ft-lbs @ 0°C). Other preferred embodiment weld deposits described herein exhibit impact toughness values of two of values (i), (ii), and (iii). And, additional preferred embodiment weld deposits described herein exhibit all three impact toughness values, i.e. (i), (ii), and (iii). It is remarkable that such a degree of impact toughness can be achieved in combination with the high strength characteristics noted herein. Although the preferred embodiment weld deposits as described herein exhibit high impact toughness values and high yield strengths, the present invention includes weld deposits that only exhibit one or more of the high impact toughness values and not necessarily the high strength values; or alternately, weld deposits that only exhibit the high strength values and not necessarily the one or more high impact toughness values.

The electrode of the present invention is particularly directed to cored electrodes having a metal sheath that surrounds a fill composition in the core of the sheath and will be described with particular reference thereto. However, it will be appreciated that the present invention is applicable to other types of electrodes. The cored electrode of the present invention has a fill composition which includes a slag system and metal alloy system that deposits a crack resistant high strength composition that is particularly useful in welding high strength steels. The weld formed by the electrode of the present invention can be used to form high strength deposits that are especially useful in connecting and/or repairing steels in high strength applications.

In one aspect of the present invention, the electrode of the present invention can be a self-shielding electrode. As such, little or no shielding gas is required when using the electrode. It can be appreciated that a shielding gas can be used. If such a shielding gas is used, the shielding gas is used in conjunction with the electrode to provide protection to the weld bead or buffer layers from elements and/or compounds in the atmosphere. The shielding gas generally includes one or more gases. These one or more gases are generally inert or substantially inert with respect to the composition of the weld bead or buffer layer. The shielding gas can include, but is not limited to carbon dioxide shielding gas, or carbon dioxide and argon blend shielding gas, wherein the carbon dioxide constitutes from about 2 to about 40% of the blend. In one non-limiting embodiment of the invention, when a blended shielding gas is used, the shielding gas includes from about 5 to about 25 percent by volume carbon dioxide and the balance argon. As will be appreciated, other and/or additional inert or substantially inert gasses can be used.

In another and/or alternative aspect of the present invention, the cored electrode includes a metal sheath that is formed primarily from iron (e.g., carbon steel, low carbon steel, stainless steel, low alloy steel, etc.). However, the metal sheath can include other metals such as, but not limited to aluminum, antimony, bismuth, boron, carbon, chromium, cobalt, copper, lead, manganese, molybdenum, nickel, niobium, silicon, sulfur, tin, titanium, tungsten, vanadium, zinc and/or zirconium. In one non-limiting embodiment of the invention, the metal sheath primarily includes iron and one or more other elements such as, but not limited to, carbon, chromium, copper, manganese, molybdenum, nickel and/or silicon. In another non-limiting embodiment of the invention, the iron content of the metal sheath is at least about 80 weight percent. In still another non-limiting embodiment of the invention, the sheath of the cored electrode includes low carbon steel. When the fill composition is included in the cored electrode, the fill composition typically constitutes at least about 1 weight percent of the total electrode weight, and not more than about 55 weight percent of the total electrode weight, and typically about 10-50 weight percent of the total electrode weight, and more typically about 15-40 weight percent of the total electrode weight, and even more typically about 15-35 weight percent of the total electrode weight. In certain preferred embodiments, a fill proportion of about 20% can be used (based upon the total electrode weight). And, it is contemplated that in other preferred embodiments, a fill proportion of about 30% can be used. In one non-limiting embodiment of the invention, the fill composition of the cored electrode has a higher weight percent when the sheath is formed of a low carbon steel. In one particular non-limiting example, the fill composition of the cored electrode in a low carbon mild steel sheath is about 30-50 weight percent of the total electrode, typically about 35-48 weight percent of the total electrode, and more typically about 40-46 weight percent of the total electrode. In another particular non-limiting example, the fill composition of the cored electrode in a stainless steel sheath is about 10-30 weight percent of the total electrode, typically about 12-28 weight percent of the total electrode, and more typically about 20-26 weight percent of the total electrode.

More specifically, according to the present invention, an electrode composition is utilized which provides a deposited preferred embodiment weld metal having the following weight percent composition, as set forth in Table 1:

**Table 1**

| **Element** | **Concentration (weight percent)** |
|---|---|
| C | about 0.05 to about 0.20 |
| Mn | about 1.4 to about 2.4 |
| Si | about 0.2 to about 0.4 |
| S | about 0 to about 0.020 |
| P | about 0 to about 0.020 |
| Cu | about 0 to about 0.20 |
| Ni | about 2.3 to about 5.4 |
| Cr | about 0.6 to about 1.0 |
| Mo | about 0.25 to about 1.10 |
| V | about 0 to about 0.05 |
| Ti | about 0 to about 0.08 |
| Zr | about 0 to about 0.09 |
| B | about 0 to about 0.0030 |
| Fe | Balance |

In comparison to the compositions of conventional high strength deposited weld metals, the preferred embodiment weld metal compositions, as set forth in Table 1 generally include significantly less silicon and significantly less nickel. The preferred embodiment weld metal compositions can also include less manganese than corresponding conventional high strength deposited weld metals. The preferred embodiment weld metal compositions generally include greater amounts of one or more of molybdenum, titanium, and chromium, as compared to conventional high strength deposited weld metal compositions.

In the preferred embodiment weld metal compositions set forth in Table 1, the composition includes silicon in a concentration of from about 0.2 to about 0.4%, more preferably from about 0.32 to about 0.38%, and most preferably about 0.35%.

In the preferred embodiment weld metal composition in Table 1, the composition includes nickel in a concentration of from about 2.3 to about 5.4%, more preferably from about 2.9 to about 4.4%, and most preferably about 3.4%.

In the preferred embodiment weld metal composition in Table 1, when utilizing reduced levels of silicon and/or nickel, increased amounts of one or more of molybdenum, titanium, and chromium (as compared to a corresponding conventional high strength weld composition) can be used.

Preferably, the weld composition set forth in Table 1 includes molybdenum at a concentration of from about 0.25 to about 1.10%, more preferably from about 0.3 to about 0.8%, and most preferably about 0.55%.

The preferred weld composition set forth in Table 1 includes titanium at a concentration of from about 0 to about 0.08%, more preferably from about 0.01% to about 0.05%, and most preferably about 0.02%.

The preferred embodiment weld composition set forth in Table 1 includes chromium at a concentration of from about 0.6 to about 1.0%, more preferably from about 0.8 to about 1.0%, and most preferably about 1.0%.

In another preferred embodiment according to the present invention, an electrode composition is provided as set forth in Table 2:

**Table 2**

| **Element** | **Concentration** **(weight percent)** |
|---|---|
| C | about 0.05 |
| Mn | about 2.9 |
| Si | about 0.3 |
| Ni | about 6.2 |
| Cr | about 1.8 |
| Mo | about 0.8 |
| Ti | about 0.03 |
| Fe and tramp elements | Balance |

The weld deposit composition obtained from using the preferred embodiment electrode composition set forth in Table 2 is shown below in Table 3:

**Table 3**

| **Element** | **Concentration** **(weight percent)** |
|---|---|
| C | about 0.05 |
| Mn | about 2.3 |
| Si | about 0.35 |
| Ni | about 3.4 |
| Cr | about 1.0 |
| Mo | about 0.55 |
| Ti | about 0.02 |
| Cu | about 0.15¹ |
| Fe and tramp elements | Balance |

| | |
|---|---|
| ¹All of the copper originates from the base plate, there is no copper originating from the electrode. | |

One or more hydrogen scavengers can be incorporated into the preferred embodiment electrodes to further reduce the amount of hydrogen in the resulting weld metal. Non-limiting examples of hydrogen scavengers as used herein, include fluorine-containing agents such as polytetrafluoroethylene (PTFE), calcium fluoride (CAF₂), manganese fluoride (MnF), potassium silicofluoride (K₂SiF₆), tetrafluoroethylene (TFE), fluorinated ethylene propylene copolymer (FEP), hexafluoropropylene, perfluoroalkoxy (PFA), polychlorotrifluoroethylene (ECTFE), ethylene-tetrafluoroethylene (ETFE), polyvinylidene fluoride (PVDF), polyvinylfluoride (PVDF), potassium fluoride (KF), magnesium fluoride (MgF) and combinations thereof. Another example of a suitable hydrogen scavenger for use herein is a chlorine-containing agent such as polyvinyl chloride (PVC), polychloroprene, polyvinylidene chloride, sodium chloride (NaCl), potassium chloride (KC1), calcium chloride (CaCl), and combinations thereof.

In a particularly preferred embodiment, from about 0.1 to about 10%, more preferably from about 0.5 to about 8%, and most preferably from about 1 to about 2% PTFE is added to a flux cored electrode. Preferred PTFE hydrogen scavengers for incorporation in the welding consumables described herein include, but are not limited to, unfilled PTFE, carbon filled PTFE, graphite filled PTFE, and combinations thereof.

Although not wishing to be bound to any particular theory, it is believed that the hydrogen scavengers, e.g. fluorine-containing agents and/or chlorine-containing agentsserve to react with hydrogen in the weld environment, welding consumable, and/or base metal to produce one or more hydrogen-containing compounds that leave, or can be readily removed from, the weldment such that the resulting weld metal has a relatively low hydrogen content and thus has a reduced potential for hydrogen induced cracking.

The preferred weld deposits formed from the preferred electrode compositions described herein exhibit relatively low hydrogen concentrations. Generally, the preferred weld deposits meet or exceed standards set by the American Welding Society (AWS) that call for hydrogen concentrations in deposited weld metals less than 5 ml of hydrogen per 100 g of weld metal. Specifically, this AWS standard is 4.3 - 93.

As noted, it is most preferred to incorporate one or more of the various hydrogen scavengers described herein, in the electrode composition. However, other strategies for reducing the hydrogen content in the final weld metal can be used in addition to using hydrogen scavengers. For example, controlled atmospheres can be used to remove hydrogen in a weld or weldment. Welding flux can be rendered moisture-free.

Although often costly, preheating techniques and/or postweld soaking can be used to allow hydrogen to diffuse out of the weld or weldment.

The preferred embodiment flux cored electrode includes a filling composition that enhances the deposition of the metal onto a workpiece and facilitates in obtaining the desired deposited metal composition. The filling composition typically includes, by weight percent of the electrode, about 5-15 weight percent slag system and the balance alloying agents. In one specific embodiment, the filling composition constitutes about 20-50 weight percent by electrode and includes, by weight percent of the electrode, about 8-12 weight percent slag system and the balance alloying agents. One general composition of the slag system, by weight percent electrode, is set forth below. The main components of the fill in this electrode are an agent that serves as both a slagging agent and a bulking agent (up to about 10%), the hydrogen scavenger (up to about 8%), and alloys (remainder). The composition noted below is generally representative of a self-shielded or gas shielded electrode.

| | |
|---|---|
| Bulk Agent | 1-10% |
| Gas generating compound | 0.05-6% |
| Slag wetting agent | 0.05-7% |
| Stabilization agent | 0.5% |
| Surface deposition agent | 0-5% |

In another general composition of the slag system includes, by weight percent electrode:

| | |
|---|---|
| Bulk Agent | 2-9% |
| Gas generating compound | 0.1-5% |
| Slag wetting agent | 0.1-6% |
| Stabilization agent | 0.1-4% |
| Surface deposition agent | 0-4% |

The preferred embodiment electrode composition is also adapted for use in submerged arc welding processes, where high strength properties are desired. Generally, in such an application, a bare wire or stick electrode is fed to a workpiece. A separate flux feed is provided at or ahead of the electrode to generate protective gases and slag, and to optionally add alloying elements to the weld pool. Shielding gas is generally not required. It will be appreciated by those skilled in the art that the preferred electrode compositions described herein are the collective compositions for forming the preferred embodiment deposit compositions. That is, one or more additional sources for the elements of the electrode composition can be provided in a submerged arc welding process from other feeds besides the electrode.

A preferred method for arc welding high strength steel is to utilize an electrode having a composition described herein, passing electrical current through the electrode to melt it, and thereby form a deposited weld metal having a particular composition as described herein. The deposited weld metal preferably features a composition as set forth in Table 1.

Non-limiting examples of applications necessitating welding of high strength steels include pipes (for example, large diameter (18" and greater) pipe for use in transmission of gas, water, and oil), wind towers, and other structural supports susceptible to high static or dynamic loading. Specifically, when welding pipes, the preferred embodiment electrode, and resulting deposit, compositions are well suited for single or multi-pass welding and are suited for both the seam welds on the pipe and for the circumferential welds used to join one pipe to another (often referred to as double ending or double jointing).

A significant feature of the present invention is that high strength weld deposits can be formed, without hydrogen cracking or at least which are much less susceptible to hydrogen cracking, and without using a relatively high number of welding passes. Generally, in order to achieve a high strength weld with a reduced potential for hydrogen cracking, prior practices required the use of a large number of welding passes. This resulted in low productivity. Using the unique compositions described herein, a high strength weld can be produced in only a few passes, such as for example one or two passes.

Additional details of arc welding materials and specifically, cored electrodes for welding are provided in U.S. Patents 5,369,244; 5,365,036; 5,233,160; 5,225,661; 5,132,514; 5,120,931; 5,091,628; 5,055,655; 5,015,823; 5,003,155; 4,833,296; 4,723,061; 4,717,536; 4,551,610; and 4,186,293; all of which are hereby incorporated by reference.

The foregoing description is, at present, considered to be the preferred embodiments of the present invention. However, it is contemplated that various changes and modifications apparent to those skilled in the art, may be made without departing from the present invention. Therefore, the foregoing description is intended to cover all such changes and modifications encompassed within the spirit and scope of the present invention, including all equivalent aspects.

## Claims

1. A cored electrode adapted for depositing a weld deposit exhibiting high strength and/or high impact toughness in an electric arc welding process, the high strength weld deposit comprising by weight:
from about 0.05 to about 0.20% carbon;
from about 1.4 to about 2.4% manganese;
from about 0.2 to about 0.4% silicon;
from about 2.3 to about 5.4% nickel;
from about 0.6 to about 1.0% chromium;
from about 0.25 to about 1.10% molybdenum; and
an effective amount of iron.

2. The cored electrode of claim 1, wherein the concentration of silicon is from about 0.32 to about 0.38%.

3. The cored electrode of claim 2, wherein the concentration of silicon is about 0.35%.

4. The cored electrode of any one of claims 1 to 3, wherein the concentration of nickel is from about 2.9 to about 4.4%.

5. The cored electrode of claim 4, wherein the concentration of nickel is about 3.4%.

6. The cored electrode of any one of claims 1 to 5, wherein the concentration of molybdenum is from about 0.3 to about 0.8%.

7. The cored electrode of claim 6, wherein the concentration of molybdenum is about 0.55%.

8. The cored electrode of any one of claims 1 to 7, further comprising titanium in a concentration of from about 0 to about 0.08%.

9. The cored electrode of claim 8, wherein the concentration of titanium is from about 0.01% to about 0.05%.

10. The cored electrode of claim 9, wherein the concentration of titanium is about 0.02%.

11. The cored electrode of any one of claims 1 to 10, wherein the concentration of chromium is from about 0.8 to about 1.0%.

12. The cored electrode of claim 11, wherein the concentration of chromium is about 1.0%.

13. The cored electrode of any one of claims 1 to 12, further comprising:
an effective amount of a hydrogen scavenger.

14. The cored electrode of claim 13, wherein the hydrogen scavenger is selected from the group consisting of fluorine-containing agents, chlorine-containing agents, and combinations thereof.

15. The cored electrode of claim 13 or 14, wherein the hydrogen scavenger is or comprises a fluorine-containing agent selected from the group consisting of polytetrafluoroethylene, calcium fluoride, manganese fluoride, potassium silicofluoride, tetrafluoroethylene (TFE), fluorinated ethylene propylene copolymer (FEP), hexafluoropropylene, perfluoroalkoxy (PFA), polychlorotrifluoroethylene (ECTFE), ethylene-tetrafluoroethylene (ETFE), polyvinylidene fluoride (PVDF), polyvinylfluoride (PVDF), potassium fluoride (KF), magnesium fluoride (MgF) and combinations thereof.

16. The cored electrode of any one of claims 13 to 15, wherein the hydrogen scavenger is or comprises a chlorine-containing agent selected from the group consisting of polyvinyl chloride, polychloroprene, polyvinylidene chloride, sodium chloride (NaCl), potassium chloride (KCl), calcium chloride (CaCl), and combinations thereof.

17. The cored electrode of claim 15 or 16, wherein the fluorine-containing agent is polytetrafluoroethylene.

18. The cored electrode of claim 17, wherein the polytetrafluoroethylene is in the electrode at a weight concentration of from about 0.1 to about 10%.

19. The cored electrode of claim 17, wherein the polytetrafluoroethylene is in the electrode at a weight concentration of from about 0.5 to about 8%.

20. The cored electrode of claim 17, wherein the polytetrafluoroethylene is in the electrode at a weight concentration of from about 1 to about 2%.

21. The cored electrode of any one of claims 1 to 20, wherein the electrode comprises about 0.05% carbon, about 2.9% manganese, about 0.3% silicon, about 6.2% nickel, about 1.8% chromium, about 0.8% molybdenum, about 0.03% titanium, and iron.

22. The cored electrode of any one of claims 1 to 21, wherein the weld deposit comprises about 0.05% carbon, about 2.3% manganese, about 0.35% silicon, about 3.4% nickel, about 1.0% chromium, about 0.55% molybdenum, about 0.02% titanium, about 0.15% copper, and iron.

23. The cored electrode of any one of claims 1 to 22, wherein the weld deposit exhibits at least one impact toughness value of (i) up to 100 J at -30°C (75 ft-lbs @ -30°C), (ii) up to 135 J at -20°C (100 ft-lbs @ -20°C), and (iii) up to 170 J at 0°C (125 ft-lbs @ 0°C).

24. The cored electrode of claim 23, wherein the weld deposit exhibits two impact toughness values of (i), (ii), and (iii).

25. The cored electrode of claim 23, wherein the weld deposit exhibits all three impact toughness values of (i), (ii), and (iii).

26. The cored electrode of any one of claims 1 to 25, wherein the weld deposit exhibits a yield strength of at least about 690 N/mm² (690 MPa).

27. Use of the cored electrode of any one of claims 1 to 26 in a method of arc welding high strength steel, whereas electric current is passed through the electrode to melt the electrode and form the weld deposit upon the steel.
